(19) Europäisches Patentamt
European Patent Office
Office européen des brevets

(11) Publication number: **0 057 610 B1**

(12) **EUROPEAN PATENT SPECIFICATION**

(45) Date of publication of patent specification: **05.06.85**

(51) Int. Cl.$^4$: **C 09 K 11/08**

(21) Application number: **82300524.4**

(22) Date of filing: **02.02.82**

(54) **Phosphors and processes for producing same.**

(30) Priority: **02.02.81 JP 12888/81**

(43) Date of publication of application:
**11.08.82 Bulletin 82/32**

(45) Publication of the grant of the patent:
**05.06.85 Bulletin 85/23**

(84) Designated Contracting States:
**DE FR GB NL**

(56) References cited:
**EP-A-0 012 635**
**EP-A-0 030 853**

**JOURNAL OF THE PHYSICAL SOCIETY OF JAPAN, vol. 48, no. 2, February 1980, pages 534-541, Tokyo (JP); Y. NAKAO: "Luminescence centers of MgS, CaS and CaSe phosphors activated with Eu2+ Ion"**

(73) Proprietor: **Hitachi, Ltd.**
**5-1, Marunouchi 1-chome**
**Chiyoda-ku Tokyo 100 (JP)**

(72) Inventor: **Kasano, Hiroyuki**
**4-5-21 Matsubara-cho Akishima-shi**
**Tokyo (JP)**
Inventor: **Megumi, Koichi**
**4-39-16 Akatsu Itabashi-ku**
**Tokyo (JP)**
Inventor: **Yamamoto, Hajime**
**4-5-18-506 Shimo-takaido Suginami-ku**
**Tokyo (JP)**
Inventor: **Kanehisa, Osamu**
**799-9 Ohizumigakuen-cho Nerima-ku**
**Tokyo (JP)**
Inventor: **Kawamata, Youji**
**122-15 Nishi-asakawa-cho Hachioji-shi**
**Tokyo (JP)**

(74) Representative: **Paget, Hugh Charles Edward et al**
**MEWBURN ELLIS & CO. 2/3 Cursitor Street**
**London EC4A 1BQ (GB)**

**EP 0 057 610 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a phosphor and a process for producing the same and, is more particularly concerned with phosphors suitable for cathodoluminescence.

Alkaline earth sulfide phosphors are known for use as cathode-ray phosphors having a high energy efficiency. It has been reported that CaS, SrS, MgS, BaS, (Ca, Sr)S, and (Ca, Cd)S can be used as the base material for such phosphors. See, e.g., W. Lehmann and F. M. Ryan, J. Electrochem. Soc. *118* (1971) 477.

Rare earth-activated alkaline earth sulfide phosphors have an advantage over other rare earth-activated phosphors such as $Y_2O_2S:Eu$. The former type emit sufficient fluorescence even when the concentration of rare earth elements is one-tenth or less as compared with that of the latter type. This fact along with the low price of the base material greatly contributes to cost saving in the production of cathode-ray phosphors.

When it comes to color display, however, rare earth-activated alkaline earth sulfide phosphors do not necessarily give a desirable hue on the chromaticity diagram, because the luminescence center (activator) of rare earth elements gives rise to a specific emission spectrum in the binary compound matrix of the alkaline earth metals.

It is an object of the present invention to provide a phosphor which can have a high energy efficiency and can give rise to a desirable hue. A particular object is to provide a phosphor suitable for use in a projection TV tube.

The present invention provides a phosphor not containing Ba or P represented by the formula:

$$Ca_{1-x}Mg_xS:A$$

where A is at least one of lanthanide elements, Cu, Ag, Au, Sb, Pb, Bi and Mn; and $0.05 \leq x \leq 0.95$.

The invention will be generally discussed and specific examples of it given below with reference to the accompanying drawings, in which:

Figure 1 is a graph showing the relationship between the lattice constant and a compositional ratio of the solid solution matrix of the phosphor of this invention.

Figures 2, 3 and 4 are graphs illustrating aspects of this invention.

Figures 5, 6, 7 and 8 are diagrams showing the emission spectra of phosphors of the invention.

The alkaline earth sulfide phosphor has several outstanding characteristics. It has a high energy efficiency. When used as a cathode-ray phosphor, it maintains its high efficiency even when excited with a high current density or at a high temperature. It causes no change in chromaticity. On account of these characteristics, it is promising as a phosphor for a high-brightness cathode-ray tube such as a projection TV tube.

In actual use, it is important to mix matrix crystals for hue adjustment and to shift the emission spectrum by changing the forbidden band gap. It is difficult for alkaline earth metals to form a complete solid solution of any two or three of their binary compounds, because they vary in ionic radius, e.g., 0.78 Å for Mg, 1.06 Å for Ca, 1.27 Å for Sr, and 1.43 Å for Ba. So far, only the CaS—SrS compound is known as a complete solid solution. In their experiments in forming mixed crystals of MgS and SrS, the present inventors confirmed by X-ray diffraction analysis that the miscible region is limited to about 10% from the either end of the composition. A red phosphor prepared by doping Eu into mixed crystals of $Sr_xMg_{1-x}S$ having compositions close to either end is extremely low in luminescence intensity as compared with the binary compounds having the composition of either end, because the matrix crystal is remarkably deformed.

In an attempt to develop mixed crystal matrixes of alkaline earth metal sulfides other than (Ca, Sr)S mixed crystals, the present inventors prepared (Mg, Ca)S mixed crystals, noting that MgS and CaS are close to each other in ionic radius. Although it has been reported that MgS and CaS form complete solid solutions only when their mixing ratio is within about 5% from either end (E. M. Levin and H. F. McMurdie, The Phase Diagrams for Ceramists (1965), American Ceramic Society Inc.), the present inventors found that the mixture of MgS and CaS forms solid solutions at any mixing ratio when mixed sulfides are fired in the manner described in the example below. $Ca_{1-x}Mg_xS$ fired at 1200°C was studied by X-ray diffraction analysis. Figure 1 shows the graph of lattice constant vs. the compositional ratio obtained in this study.

The above-mentioned binary compounds of alkaline earth metal sulfides differ in their properties as follows: The CaS matrix, when doped with a transition metal ion activator effective for the emission of the three primary colors, has the highest luminescence efficiency (energy efficiency) and is chemically most stable. On the other hand, the MgS matrix provides the emission spectrum having the narrowest half width and has the highest spectrum efficiency (the ratio of brightness to energy efficiency under a condition of constant chromaticity). In addition, a MgS matrix containing no oxygen or water has a high luminescence efficiency, next to that of CaS. Thus, when incorporated as phosphor matrixes, the mixed crystal of $Ca_{1-x}Mg_xS$ or the mixture of $[(1-y)CaS + yMgS]$ emits luminescence of high brightness. The linear relationship between lattice constant and compositional ratio as shown in Figure 1 indicates that the CaS—MgS mixed crystal forms complete solid solutions at any compositional ratio x, except in the regions of $x < 5\%$ and $x > 95\%$. In these non-linear regions, the resulting mixed crystals are slightly unstable in their structure. In fact, this is supported to some extent by the emission spectrum, as mentioned in the

examples. In order for the mixed crystal to be stable and to provide a satisfactory hue, the value of x should preferably be in the range of $0.15 \leq x \leq 0.87$.

In the case, too, where the matrix is prepared from a mixture of CaS and MgS, the principle shown in Figure 1 should be applied. That is, the mixing ratio of the two components should preferably be established outside the regions where $y < 0.05$ and $y > 0.95$. The reason for this is that the particles of CaS and MgS in the mixture locally form solid solutions when they are brought into contact with one another in the heat treatment process which is carried out to recover the mechanical damage of the particles in the mixing step.

The above-mentioned mixture system may be represented by the general formula $(1-y)CaS:A + yMgS:A$ or $(1-y)CaS:A, C + yMgS:A, C$, where the value of y is in the range of $0.05 \leq y \leq 0.95$, A is defined above and C denotes an element or compound used as a coactivator for the aforesaid solid solution system. In this case, too, the value of y should preferably be in the range of $0.15 \leq y \leq 0.87$.

In both the solid solution system and the mixture system, the quantity of A should preferably be within the range from 50 to 10000 ppm. In the case where Eu or Eu + Ce is used as A, the value of x should preferably be in the range of $0.6 \leq x \leq 0.95$.

In both the solid solution system and the mixture system, the quantity of C should preferably be within the range from 1 to 50000 ppm. Outside this range, the coactivator may not exhibit its effect.

Using the mixture system according to this invention has the following advantages.

The phosphor particles of CaS and MgS have a particle diameter of 6 to 8 μm and 3 to 5 μm, respectively, if they are fired under such conditions as to provide a phosphor that has luminescence with the highest efficiency. Presumably, this results from the difference in the ionic radius of alkaline earth metals, and consequently the difference in the lattice constant (i.e., 5.96 Å for CaS and 5.09 Å for MgS). On the other hand, the mixed crystal of $Ca_{1-x}Mg_xS$ has an intermediate particle diameter of the individual components. The phosphor particles having a uniform particle diameter form spaces among themselves when applied in several layers to a phosphor plate so that the primary electron beam is irradiated onto the phosphor effectively. In contrast with this, the mixture of CaS and MgS having widely different particle diameters (e.g. by 50—100%) forms a phosphor coating in which particles are packed together, with the resulting increase in compactness from 10 to 15%. This leads to material saving or cost reduction by 10 to 15%.

The other advantage of using the mixture system is as follows: CaS has a band gap of about 4.8 eV and MgS has a band gap of about 5.4 eV. Therefore, MgS is less conductive than CaS. This means that MgS is liable to charge-up in the surface layer or the internal layer of the phosphor when the phosphor is subjected to cathode-ray excitation. The mixed crystal of $Ca_{1-x}Mg_xS$ has an intermediate conductivity, which decreases, due to alloy scattering, below the value expected from the compositional ratio x, and approaches to that of MgS. The effect of charge-up is serious particularly in the case of a low energy electron beam, and MgS and $Ca_{1-x}MgS$ decrease gradually in luminescence efficiency as the electron beam accelerating voltage is decreased. However, CaS and a mixture of CaS and MgS do not decrease in luminescence efficiency even when the accelerating voltage is decreased to 1 kV. Presumably, this is ascribed to the high conductivity of CaS.

A mixture system provides an emission spectrum having two peaks and a solid solution system provide an emission spectrum having one peak. Therefore, the latter provides better chromaticity.

The phosphor of this invention is preferably produced by firing in a sulfurizing atmosphere (1) CaS or a Ca compound which forms CaS on firing in a sulfurizing atmosphere, such as calcium carbonate, calcium sulfate, calcium nitrate, or calcium oxide, (2) MgS or an Mg compound which forms MgS on firing in a sulfurizing atmosphere, such as magnesium carbonate, magnesium sulfate, magnesium nitrate, or a magnesium oxide, and (3) an element or elements represented by A or a compound or compounds containing an element or elements represented by A.

The sulfurizing atmosphere means an atmosphere containing only $H_2S$, $CS_2$, or the like which is a sulfurizing gas at the aforesaid firing temperature, or an atmosphere consisting of the aforesaid sulfurizing gas, and an inert gas such as $N_2$ or Ar, and/or a reducing gas such as $H_2$, with the sulfurizing gas being more than 50 mol%.

In addition, the phosphor of this invention may be made with a compound containing the element of the co-activator. Alkali metals are preferred co-activators, and are preferably added at the time of firing.

The invention is illustrated by the following Examples.

### Example 1

Sample A of MgS:Eu, Ce was prepared by firing a mixture of magnesium sulfate ($MgSO_4$) containing 0.04 mol% of EuS and 0.05 mol% of $Ce_2S_3$ in a quartz crucible in an $H_2S$ atmosphere at 1100°C for 4 hours, followed by crushing of the fired product and resulfurization at 1200°C for 4 hours.

Separately, sample B of CaS:Eu, Ce was prepared by firing calcium carbonate ($CaCO_3$) containing 0.05 mol% of $Eu_2O_3$ and 0.01 mol% of $CeO_2$ in an alumina crucible in the air at 1300°C for 4 hours, and then crushing the fired product and sulfurizing it in an $H_2S$ atmosphere at 1200°C for 4 hours, followed by crushing again and resulfurization at 1250°C for 2 hours.

Sample A in varying amount (x moles) and sample B in corresponding amounts of $(1 - x)$ moles were

fired in an $H_2S$ atmosphere at 1250°C for 1 hour. The reaction products were found by X-ray diffraction analysis to be the phosphors of mixed crystal $Ca_{1-x}Mg_x$:Eu, Ce having the different compositions. Figure 2 shows the emission peak wavelength of the resulting phosphors plotted against the compositional ratio x. The emission spectrum of one of the resulting phosphors is shown in Figure 5. This one has the compositional ratio of x = 0.75 and the composition of $Ca_{0.25}Mg_{0.75}S$:Eu(0.1 mol%), Ce(0.01 mol%). The CIE chromaticity diagram is expressed by x = 0.660 and y = 0.342. Even when the value of x was varied, the resulting phosphors gave spectra having a single peak. The emission wavelength was maximum when x = 0.4, and it shifted to the shorter side as x was increased. This tendency was pronounced in the region where $x \geq 0.95$. Since the brightness for visual sensitivity decreases as the wavelength shifts to the longer side, $Ca_xMg_{1-x}S$:Eu, Ce gave the highest brightness when x = 1 and the lowest brightness when x was about 0.4. In the regions where $x > 0.95$ and $x < 0.05$, it was difficult to control the composition of the solid solution and the reproducibility was poor and the emission spectra were poor in symmetry. Presumably, this is because the solid solution is unstable in structure as suggested by Figure 1.

With x = 0.85, the phosphor of this example gave almost the same hue as the red phosphor $Y_2O_2S$:Eu which is used for color TV tubes at present. For use as a red phosphor which emits light of 650 nm or less at practical brightness, the composition with x in the range of $0.6 \leq x \leq 0.95$ is desirable.

$Ca_{1-x}Mg_xS$:Eu gave the same spectrums as shown in Figure 2, but gave brightness 10 to 30% lower than $Ca_{1-x}Mg_xS$:Eu, Ce at the same compositional ratio.

In the course of preparing further examples of the solid solution from samples A and B, $PCl_3$ was doped into the phosphor from the gas phase in an amount from 50 to 10000 ppm. The doped phosphors increased its brightness by as much as 15% at the same compositional ratio.

Samples A and B were mixed and fired at 1200°C for 5 minutes in an $H_2S$ atmosphere, and then cooled slowly to 500°C. A phosphor was obtained which is based on a mixture having the composition [(1 − y)CaS + yMgS]. Mechanical damage caused by mixing is almost recovered by heat treatment.

This phosphor has two peaks (or shoulders) in its emission spectrum as shown in Figure 6 when y = 0.75. Nevertheless, in contrast with the solid solution, the hue of this phosphor is easily controlled, without serious deterioration of brightness, with y in the range of $0.05 \leq y \leq 0.95$. In addition, this phosphor was found to have good reproducibility.

Incidentally, the spectrum shown in Figure 6 was obtained when a mixture of 0.25CaS:Eu(0.1 mole%), Ce(0.01 mol%) + 0.75 MgS:Eu(0.04 mol%), Ce(0.01 mol%) was excited by 10 kV electron beam. The CIE chromaticity diagram is expressed by x = 0.611 and y = 0.388.

Example 2

$Ca_{1-x}Mg_xS$:Ce phosphors were prepared as follows: Magnesium sulfate powder and calcium sulfate powder were mixed at a prescribed molar ratio. The mixture, after addition of 0.01 mol% of $Ce_2S_3$ was fired in a quartz crucible at 1000°C for 3 hours in an $H_2S$ atmosphere. The resulting sulfide was crushed and sulfurized again at 1100°C for 3 hours in an $H_2S$ atmosphere. Further, the resulting sulfide was crushed and sulfurized at 1200°C for 4 hours.

The relationship between the emission wavelength peak and the compositional ratio of, the obtained-phosphor was shown in Figure 3. (The curve in Figure 3 represents the main peak of a shorter wavelength out of the two peaks or shoulders observed.) As in Figure 2, it is noted that the emission wavelength is maximum at approximately x = 0.7 and decreases as x nears either end.

The optimum Ce doping concentration is 0.05 to 0.1 mol% for CaS and 0.005 to 0.02 mol% for MgS. In the case of $Ca_{1-x}Mg_xS$:Ce, the optimum value lies at the middle of the compositional ratio.

Figure 3 indicates that the $Ca_{1-x}Mg_xS$:Ce phosphor covers emission wavelengths from 520 to 542 nm (green to yellow green) at room temperature and fine hue control within this range is possible.

An example of emission spectra obtained by excitation with 10 kV electron beam is shown in Figure 7. (x = 0.75 and Ce concentration is 0.03 mol%.)

Example 3

$Ca_{1-x}Mg_xS$:Cu (0.1%) phosphors were prepared as follows: Calcium carbonate and magnesium carbonate were mixed at a prescribed ratio, and the mixture was fired in an alumina crucible at 1200°C for 6 hours in the air. The resulting oxide mixture was sulfurized in a quartz boat at 1200°C for 3 hours in an $H_2S$ atmosphere. The resulting sulfide was crushed and sulfurized again at 1200°C for 3 hours in an $H_2S$ atmosphere. These steps were repeated 3 to 4 times. The resulting $Ca_{1-x}Mg_xS$ was mixed with 0.1 mol% of CuS and the mixture was sealed in a quartz ampoule under a vacuum of $10^{-5}$ Torr. This ampoule was kept at 1200°C for 6 hours to give $Ca_{1-x}Mg_xS$:Cu (0.1%).

The cathodoluminescence spectra of the resulting phosphors were measured, and the main peak emission wavelengths were plotted against the compositional ratios, as shown in Figure 4.

Figure 4 indicates that the $Ca_{1-x}Mg_xS$:Cu phosphor covers emission wavelengths from 414 to 441 nm (violet to blue) at room temperature and hue control within this range is possible by changing the compositional ratio.

An example of emission spectra obtained by excitation with 10 kV electron beam is shown in Figure 8 (x = 0.75).

In the above examples, $Ca_{1-x}Mg_xS$ had incorporated in it Eu (or Eu, Ce), Ce, or Cu as the activator A,

and the relation between peak emission wavelength and compositional ratio x and other emission characteristics of the resulting phosphors were studied. The scope of this invention is not limited to these. The solid solutions may be made with other activators such as Sb (peak wavelength 546 to 572 nm), Pb (peak wavelength 365 to 400 nm), Bi (peak wavelength 447 to 481 nm), and Mn (peak wavelength 565 to 595 nm), which exhibit high emission efficiency. Thus, it is possible to obtain almost all colors from red to near ultraviolet with the phosphors of this invention.

The phosphor $Ca_{1-x}Mg_xS:Au, Cl$ has peak wavelengths of 512 nm at $x = 0.2$ and 493 nm at $x = 0.7$; and the phosphor $Ca_{1-x}Mg_xS:Ag, K$ has peak wavelengths of 339 nm at $x = 0.2$ and 410 nm at $x = 0.7$.

Example 4

Sample A was prepared by mixing 4 moles of CaO and 1 mole of MgO, and sample B was prepared by mixing 1.5 moles of CaO and 8.5 moles of MgO. These samples A and B were mixed individually with 0.5 mol% each of $SrCO_3$, $Li_2CO_3$, $K_2CO_3$, and $Rb_2CO_3$. The resulting products were designated as follows:

| | Sample A | Sample B |
|---|---|---|
| $SrCO_3$: | A-1 | B-1 |
| $Li_2CO_3$: | A-2 | B-2 |
| $K_2CO_3$: | A-3 | B-3 |
| $Rb_2CO_3$: | A-4 | B-4 |
| None: | A-5 | B-5 |

Each of these samples was then mixed with 0.05 mol% of EuS and fired at 1200°C for 3 hours in an $H_2S$ atmosphere. The resulting product was crushed and fired again at 1200°C for 3 hours in an $H_2S$ atmosphere. Sample A assumed a red color and sample B assumed a red-orange color.

These samples were subjected to 27 kV electron beam for excitation at room temperature. The emission characteristics of these samples are shown in Table 1. It is to be noted that there is almost no difference between samples A and B with respect to the emission wavelength, but the emission efficiency was increased by 5% or more by the coactivator Sr or alkali metals. These coactivators are effective for $Ca_{1-x}Mg_xS:Eu$, and the same sensitizing effect was observed where Ce was used as the activator. The effect of the coactivator was investigated by varying the concentrations of Sr and alkali metals added to $Ca_{0.15}Mg_{0.85}S:Eu$. The sensitizing effect was observed at concentrations from 1 to 50000 rpm. In the case of Sr in concentration higher than 10000 ppm, shift of the peak to shorter wavelength was observed.

TABLE 1

| Sample No. | Emission Wavelength (nm) | Relative Luminescent Efficiency (%) |
|---|---|---|
| A-1 | 654 | 105 |
| A-2 | 656 | 106 |
| A-3 | 656 | 106 |
| A-4 | 655 | 107 |
| A-5 | 656 | 100 |
| B-1 | 630 | 105 |
| B-2 | 634 | 109 |
| B-3 | 634 | 110 |
| B-4 | 633 | 112 |
| B-5 | 632 | 100 |

Example 5

$CaSO_4$ and $MgSO_4$ were mixed at prescribed ratios to prepare four compounds $(1-x)CaSO_4 \cdot xMgSO_4$ (where x = 0.2, 0.4, 0.6, and 0.8). To the resulting compounds were added 0.01 mol% of $Eu_2O_3$ and 0.003 mol% of $CeO_2$. Each of the resulting compounds was divided into four portions, and to these portions were added respectively 0.3 mol% each of (1) $GaCl_3$, (2) $InCl_3$, (3) $AlCl_3$, and (4) $NH_4Cl$. The mixtures were fired at 1100°C for 3 hours in an $H_2S$ atmosphere. The fired samples were crushed and fired again at 1200°C for 4 hours in an $H_2S$ atmosphere. Semiquantitative analyses indicated that the chloride in $Ca_{1-x}Mg_xS$:Eu, Ce was reduced to one-third of the initial quantity.

The luminescence of the resulting phosphors was studied at room temperature with 18 kV electron beam. The emission wavelenth and relative luminescent efficiency for each compositional ratio are shown in Table 2. It is to be noted that the chlorides of Group III elements act as coactivators, bringing about sensitizing effects, but cause no change in the peak wavelength. These coactivators exhibit optimum sensitizing effect at concentrations from 1 to 50000 ppm depending on the sample preparation conditions. Outside this range, no good results were obtained. It was also found that these coactivators have a sensitizing effect for Cu, Pb, and Ag activators as well as Eu and Ce activators.

TABLE 2

| x | 0.2 | 0.4 | 0.6 | 0.8 |
|---|---|---|---|---|
| Peak Wavelength (nm) | 655 | 658 | 649 | 637 |
| 1 | 110% | 108% | 108% | 107% |
| 2 | 109 | 108 | 109 | 110 |
| 3 | 105 | 106 | 108 | 108 |
| 4 | 100 | 100 | 100 | 100 |

Example 6

$Ca_{1-x}Mg_xS$ compounds were prepared in the same manner as in Example 5, and in each compound was incorporated 0.1 mol% of $Cu_2S$ activator and in two cases, 1000 ppm of Se or Te coactivator. The resulting compounds were fired at 1200°C for 10 minutes in an $H_2S$ atmosphere with an HCl flow. The resulting samples were studied for cathodoluminescence at room temperature with 18 kV electron beam. The results are shown in Table 3. (Sample No. 1 was prepared by adding 1000 ppm of Se; Sample No. 2 was prepared by adding 1000 ppm of Te; and Sample No. 3 contained neither Se nor Te.) It is to be noted that Se and Te are effective as the coactivator for $Ca_{1-x}Mg_xS$:Cu in the presence of halogen. It was found that Se and Te are also effective for Eu, Ce, Mn, and Bi.

TABLE 3

| x | 0.2 | 0.4 | 0.6 | 0.8 |
|---|---|---|---|---|
| Peak Wavelength (nm) | 422 | 433 | 442 | 440 |
| Relative Luminescent Intensity | 112% | 112% | 115% | 118% |
| No. 1 | 112% | 112% | 115% | 118% |
| No. 2 | 106 | 108 | 107 | 109 |
| No. 3 | 100 | 100 | 100 | 100 |

As mentioned above, the phosphors of this invention which are represented by $Ca_{1-x}Mg_xS$:A, $Ca_{1-x}Mg_xS$:A, C, [(1 − y)CaS:A + yMgS:A], and [(1 − y)CaS:A, C + yMgS:A, C] (wherein $0.05 \leq x \leq 0.95$ and $0.05 \leq y \leq 0.95$) are capable of being adjusted to a specific emission spectrum or a specific hue (which heretofore has been obtained by adding an activator to CaS or MgS), within a certain range of wavelengths without deterioration of the emission efficiency. They are particularly suitable as the phosphors of color display devices.

The term "lanthanide elements" covers elements numbered 39 (yttrium) and 57 (lanthanum) to 71 (lutetium).

**Claims**

1. A phosphor not containing Ba or P represented by the formula:

$$Ca_{1-x}Mg_xS:A$$

where A is at least one of lanthanide elements (elements numbered 39 (yttrium) and 57 (lanthanum) to 71 (lutetium), Cu, Ag, Au, Sb, Pb, Bi, and Mn, and $0.05 \leq x \leq 0.95$.

2. A phosphor as claimed in claim 1, wherein $0.15 \leq x \leq 0.87$.

3. A phosphor as claimed in claim 1, wherein A is at least one of the lanthanide elements.

4. A phosphor as claimed in claim 3 wherein A is Eu and $0.6 \leq x \leq 0.95$.

5. A phosphor as claimed in claim 3 wherein A is Eu and Ce and $0.6 \leq x \leq 0.95$.

6. A phosphor as claimed in claim 1, wherein A is Cu.

7. A phosphor as claimed in claim 1, wherein A is Ag.

8. A phosphor as claimed in claim 1, wherein A is Au.

9. A phosphor as claimed in claim 1, wherein A is Sb.

10. A phosphor as claimed in claim 1, wherein A is Pb.

11. A phosphor as claimed in claim 1, wherein A is Bi.

12. A phosphor as claimed in claim 1 wherein A is Mn.

13. A phosphor as claimed in any one of claims 1, 2, 3 and 6 to 12, which further contains one or more alkali metals as a coactivator.

14. A phosphor mixture comprising (1) a component represented by the formula

$$(1-y)CaS:A$$

and (2) a component represented by the formula

$$yMgS:A$$

where, in each case A is at least one of lanthanide elements [elements numbered 39 (yttrium) and 57 (lanthanum) to 71 (lutetium)], Cu, Ag, Au, Sb, Pb, Bi and Mn, and in each case $0.05 \leq y \leq 0.95$.

15. A phosphor mixture as claimed in claim 14 wherein A is, in each case, at least one lanthanide element.

16. A phosphor mixture as claimed in claim 14 or claim 15 wherein $0.15 \leq y \leq 0.87$.

17. A phosphor mixture as claimed in any one of claims 14 to 16 where at least one of components (1) and (2) further contains one or more alkali metals as a coactivator.

18. A process for producing a phosphor according to any one of claims 1 to 13 comprising firing, in a sulfurizing atmosphere, (1) CaS or a Ca compound which forms CaS on firing in said atmosphere, (2) MgS or a Mg compound which forms MgS on firing in said atmosphere, and (3) the element(s) A or a compound containing the element(s) A.

19. A process as claimed in claim 18 wherein said sulfurizing atmosphere comprises at least $H_2S$ and $CS_2$.

20. A process as claimed in claim 18 wherein said sulfurizing atmosphere is a mixture composed of at least one sulfurizing gas selected from $H_2S$ and $CS_2$ and at least one gas selected from inert gases and reducing gases, and said sulfurizing atmosphere contains more than 50 vol% of said sulfurizing gas.

21. A process as claimed in any one of claims 18 to 20, wherein said Ca compound is one or more of calcium carbonate, calcium sulfate, calcium nitrate and calcium oxide.

22. A process as claimed in any one of Claims 18 to 21 wherein said Mg compound is one or more of magnesium carbonate, magnesium sulfate, magnesium nitrate, and magnesium oxide.

23. A process as claimed in any one of claims 18 to 22, wherein at least one of components (1) and (2) contain one or more alkali metals as a coactivator, which is added at the time of firing.

**Patentansprüche**

1. Leuchtstoff, der nicht Ba oder P enthält und durch die Formel:

$$Ca_{1-x}Mg_xS:A$$

beschrieben ist, wobei A zumindest eines der Elemente der Lanthanid-Serie (Elemente mit der Ordnungszahl 39 (Yttrium) und 57 (Lanthan) bis 71 (Lutetium)), Cu, Ag, Au, Sb, Pb, Bi und Mn, und $0,05 \leqq x \leqq 0,95$ ist.

2. Leuchtstoff nach Anspruch 1, wobei $0,15 \leqq x \leqq 0,87$ ist.

3. Leuchtstoff nach Anspruch 1, wobei A zumindest eines der Lanthanid-Elemente ist.

4. Leuchtstoff nach Anspruch 3, wobei A Eu, und $0,6 \leqq x \leqq 0,95$ ist.

5. Leuchtstoff nach Anspruch 3, wobei A Eu und Ce, und $0,6 \leqq x \leqq 0,95$ ist.

6. Leuchtstoff nach Anspruch 1, wobei A Cu ist.
7. Leuchtstoff nach Anspruch 1, wobei A Ag ist.
8. Leuchtstoff nach Anspruch 1, wobei A Au ist.
9. Leuchtstoff nach Anspruch 1, wobei A Sb ist.
10. Leuchtstoff nach Anspruch 1, wobei A Pb ist.
11. Leuchtstoff nach Anspruch 1, wobei A Bi ist.
12. Leuchtstoff nach Anspruch 1, wobei A Mn ist.
13. Leuchtstoff nach einem der Ansprüche 1, 2, 3 und 6 bis 12, der weiterhin als einen Coaktivator ein oder mehrere Alkalimetalle enthält.
14. Leuchtstoffgemisch, das (1) eine durch die Formel:

$$(1-y)CaS:A$$

beschriebene Komponente und (2) eine durch die Formel:

$$yMgS:A$$

beschriebene Komponente aufweist, wobei in jedem Falle A zumindest eines der Elemente der Lanthanid-Serie (Elemente mit der Ordnungszahl 39 (Yttrium) und 57 (Lanthan) bis 71 (Lutetium)), Cu, Ag, Au, Sb, Pb, Bi und Mn, und in jedem Falle $0{,}05 \leqq y \leqq 0{,}95$ ist.
15. Leuchtstoffgemisch nach Anspruch 14, wobei A in jedem Falle zumindest ein Lanthanid-Element ist.
16. Leuchtstoffgemisch nach Anspruch 14 oder Anspruch 15, wobei $0{,}15 \leqq y \leqq 0{,}87$ ist.
17. Leuchtstoffgemisch nach einem der Ansprüche 14 bis 16, wobei zumindest eine der Komponenten (1) und (2) weiterhin als einen Coaktivator eines oder mehrere Alkalimetalle enthält.
18. Verfahren zur Herstellung eines Leuchtstoffes nach einem der Ansprüche 1 bis 13, nach dem in einer sulfurierenden Atmosphäre
(1) CaS oder eine Ca-Verbindung, die beim Brennen in der genannten Atmosphäre CaS bildet,
(2) MgS oder eine Mg-Verbindung, die beim Brennen in der genannten Atmosphäre MgS bildet, und
(3) das/die Element(e) A oder eine das/die Element(e) A enthaltende Verbindung
gebrannt werden.
19. Verfahren nach Anspruch 18, wobei die sulfurierende Atmosphäre zumindest $H_2S$ und $CS_2$ aufweist.
20. Verfahren nach Anspruch 18, wobei die sulfurierende Atmosphäre ein aus zumindest einem aus $H_2S$ und $CS_2$ gewählten sulfurierenden Gas und zumindest einem aus inerten Gasen und reduzierenden Gasen gewählten Gas zusammengesetztes Gemisch ist, und die sulfurierende Atmosphäre mehr als 50 vol% des sulfurierenden Gases enthält.
21. Verfahren nach einem der Ansprüche 18 bis 20, wobei die genannte Ca-Verbindung eine oder mehrere der Verbindungen Calciumcarbonat, Calciumsulfat, Calciumnitrat und Calciumoxid ist.
22. Verfahren nach einem der Ansprüche 18 bis 21, wobei die genannte Mg-Verbindung eine oder mehrere der Verbindungen Magnesiumcarbonat, Magnesiumsulfat, Magnesiumnitrat und Magnesiumoxid ist.
23. Verfahren nach einem der Ansprüche 18 bis 22, wobei zumindest eine der Komponenten (1) und (2) ein oder mehrere Alkalimetalle als einen Coaktivator enthält, der zur Zeit des Brennens zugegeben wird.

**Revendications**

1. Matériau luminescent ne contenant pas de Ba, ni de P, représenté par le formule:

$$Ca_{1-x}Mg_xS:A$$

dans laquelle A est constitué par au moins l'un des éléments lanthanides [éléments numérotés 39 (yttrium) et 57 (lanthanum) jusqu'à 71 (lutétium)], le Cu, le Ag, Au, Sb, Bi, Pb, et Mn, avec $0{,}05 \leq x \leq 0{,}95$.
2. Matériau luminescent selon la revendication 1, dans lequel $0{,}15 \leq x \leq 0{,}87$.
3. Matériau luminescent selon la revendication 1, dans lequel A est au moins l'un des éléments lanthanides.
4. Matériau luminescent selon la revendication 3, dans lequel A est du Eu et $0{,}6 \leq x \leq 0{,}95$.
5. Matériau luminescent selon la revendication 3, dans lequel A est du Eu et du Ce et $0{,}6 \leq x \leq 0{,}95$.
6. Matériau luminescent selon la revendication 1, dans lequel A est du Cu.
7. Matériau luminescent selon la revendication 1, dans lequel A est du Ag.
8. Matériau luminescent selon la revendication 1, dans lequel A est du Au.
9. Matériau luminescent selon la revendication 1, dans lequel A est du Sb.
10. Matériau luminescent selon la revendication 1, dans lequel A est du Pb.
11. Matériau luminescent selon la revendication 1, dans lequel A est du Bi.
12. Matériau luminescent selon la revendication 1, dans lequel A est du Mn.

13. Matériau luminescent selon l'une quelconque des revendications 1, 2, 3 et 6 à 12, qui contient en outre un ou plusieurs métaux alcalins en tant que coactivateur.

14. Mélange formant matériau luminescent comportant (1) un composant représenté par la formule:

$$(1-y)CaS:A$$

et (2) un composant représenté par la formule:

$$yMgS:A$$

dans lesquelles dont chaque cas A est au moins l'un des éléments lanthanides [éléments numérotés 39 (yttrium) et 57 (lanthane) jusqu'au 71 (lutétium)], Cu, Ag, Au, Sb, Pb, Vi, Mn avec dans chaque cas $0,05 \leq y \leq 0,95$.

15. Mélange formant substance luminescente selon la revendication 14, dans lequel A est dans chaque cas au moins un élément lanthanide.

16. Mélange formant matériau luminescent selon la revendication 14 ou 15, dans lequel $0,15 \leq y \leq 0,87$.

17. Mélange formant matériau luminescent selon l'une quelconque des revendications 14 à 16, dans lequel au moins l'un des composants (1) et (2) contient en outre un ou plusieurs métaux alcalins formant coactivateur.

18. Procédé pour fabriquer un matériau luminescent selon l'une quelconque des revendications 1 à 13, incluant la cuisson, dans une atmosphère de sulfurisation, (1) de CaS ou d'un composé de Ca qui forme du CaS lors de la cuisson dans ladite atmosphère, (2) de MgS ou d'un composé de Mg qui forme du MgS lors de la cuisson dans ladite atmosphère et (3) du ou des éléments A ou d'un composé contenant le ou les éléments A.

19. Procédé selon la revendication 18, selon lequel ladite atmosphère de sulfurisation comporte au moins du $H_2S$ et du $CS_2$.

20. Procédé selon la revendication 18, selon lequel ladite atmosphère de sulfurisation est un mélange constitué par au moins un gaz de sulfurisation choisi parmi $H_2S$ et $CS_2$ et, par au moins un gaz choisi parmi les gaz inertes et les gaz réducteurs, et ladite atmosphère de sulfurisation contient plus de 50 % en volume dudit gaz de sulfurisation.

21. Procédé selon l'une quelconque des revendications 18 à 20, selon lequel ledit composé de Ca est un ou plusieurs des éléments suivants: carbonate de calcium, sulfate de calcium, nitrate de calcium et oxyde de calcium.

22. Procédé selon l'une quelconque des revendications 18 à 21, selon lequel ledit composé de Mg est l'un ou plusieurs des éléments suivants: carbonate de magnésium, sulfate de magnésium, nitrate de magnésium et oxyde de magnésium.

23. Procédé selon l'une quelconque des revendications 18 à 22, selon lequel au moins l'un des composants (1) et (2) contient un ou plusieurs métaux alcalins en tant qu'activateur, qui est ajouté au moment de la cuisson.

FIG. 1

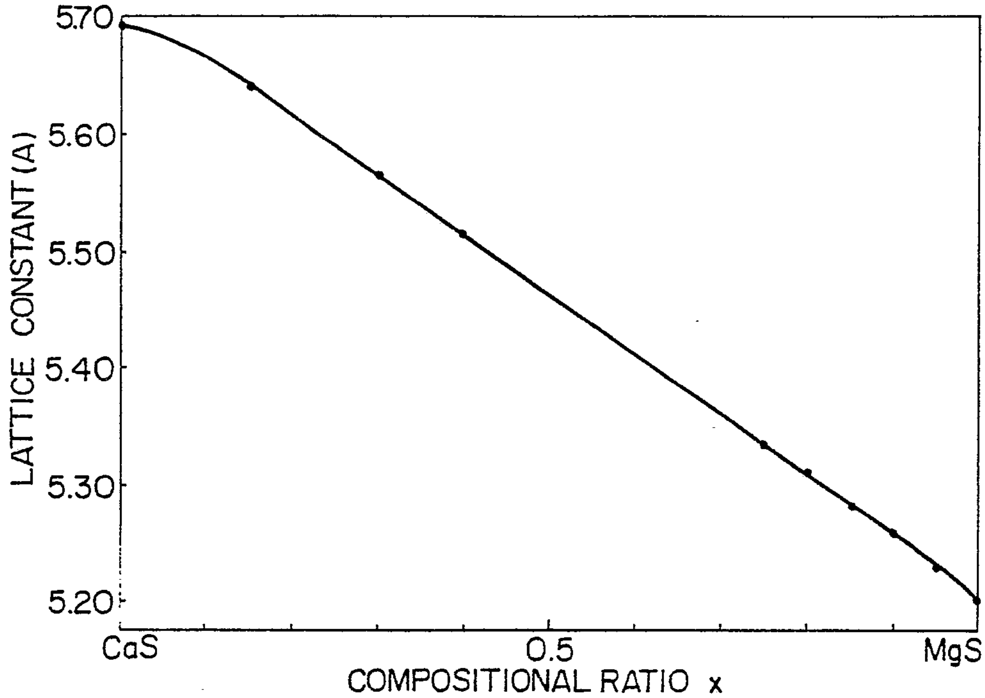
5.70
5.60
5.50
5.40
5.30
5.20
LATTICE CONSTANT (A)
CaS
0.5
MgS
COMPOSITIONAL RATIO x

FIG. 2

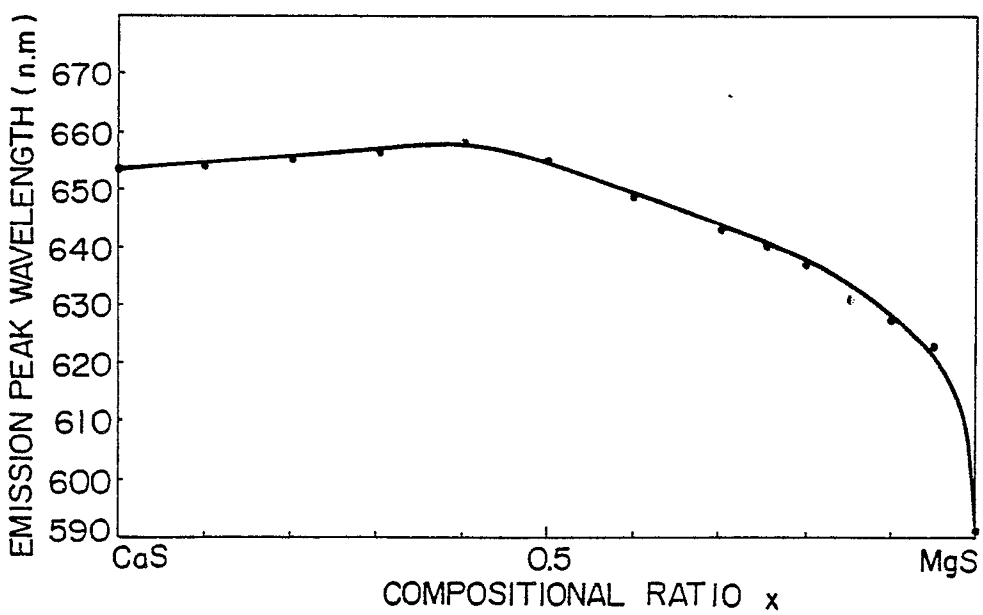
670
660
650
640
630
620
610
600
590
EMISSION PEAK WAVELENGTH (n.m)
CaS
0.5
MgS
COMPOSITIONAL RATIO x

FIG. 3

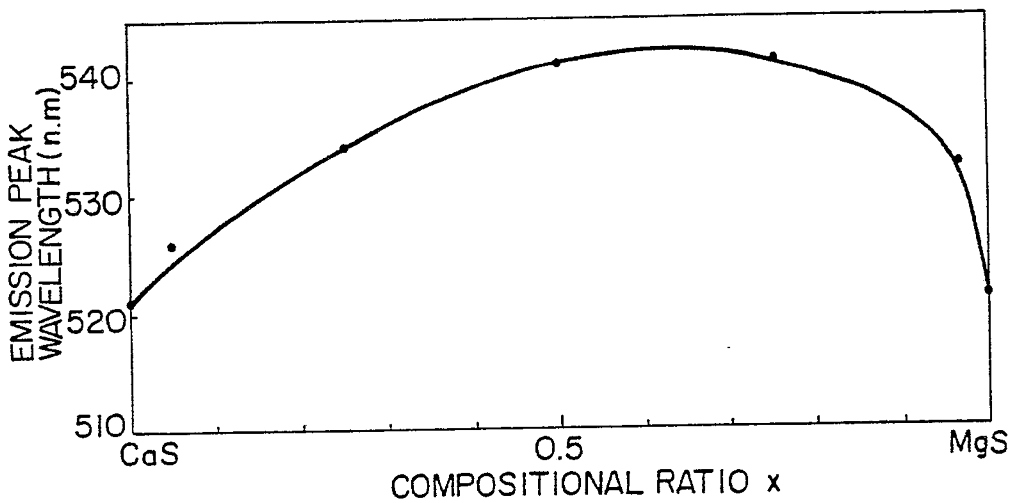
EMISSION PEAK WAVELENGTH (n.m)
540
530
520
510
CaS
0.5
MgS
COMPOSITIONAL RATIO x

FIG. 4

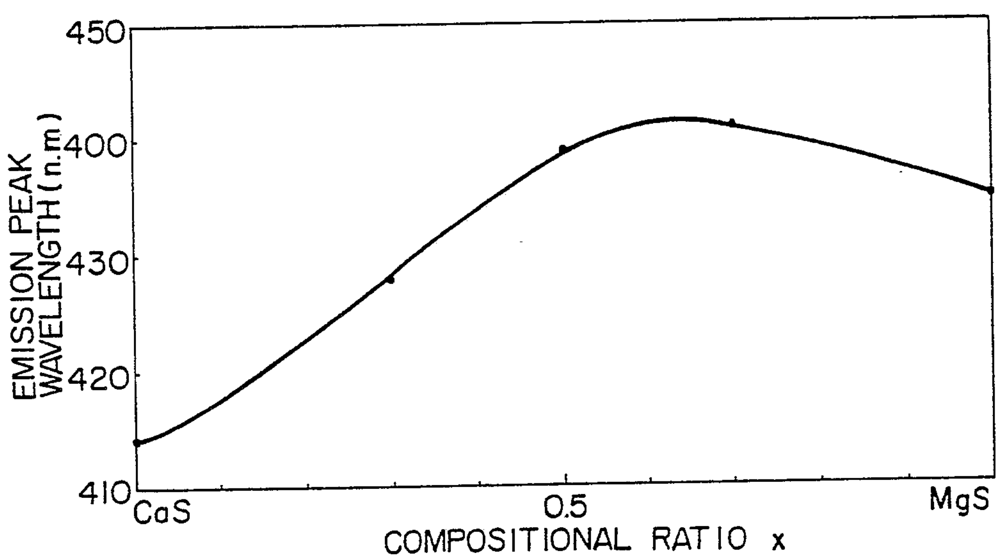
EMISSION PEAK WAVELENGTH (n.m)
450
400
430
420
410
CaS
0.5
MgS
COMPOSITIONAL RATIO x

FIG. 5

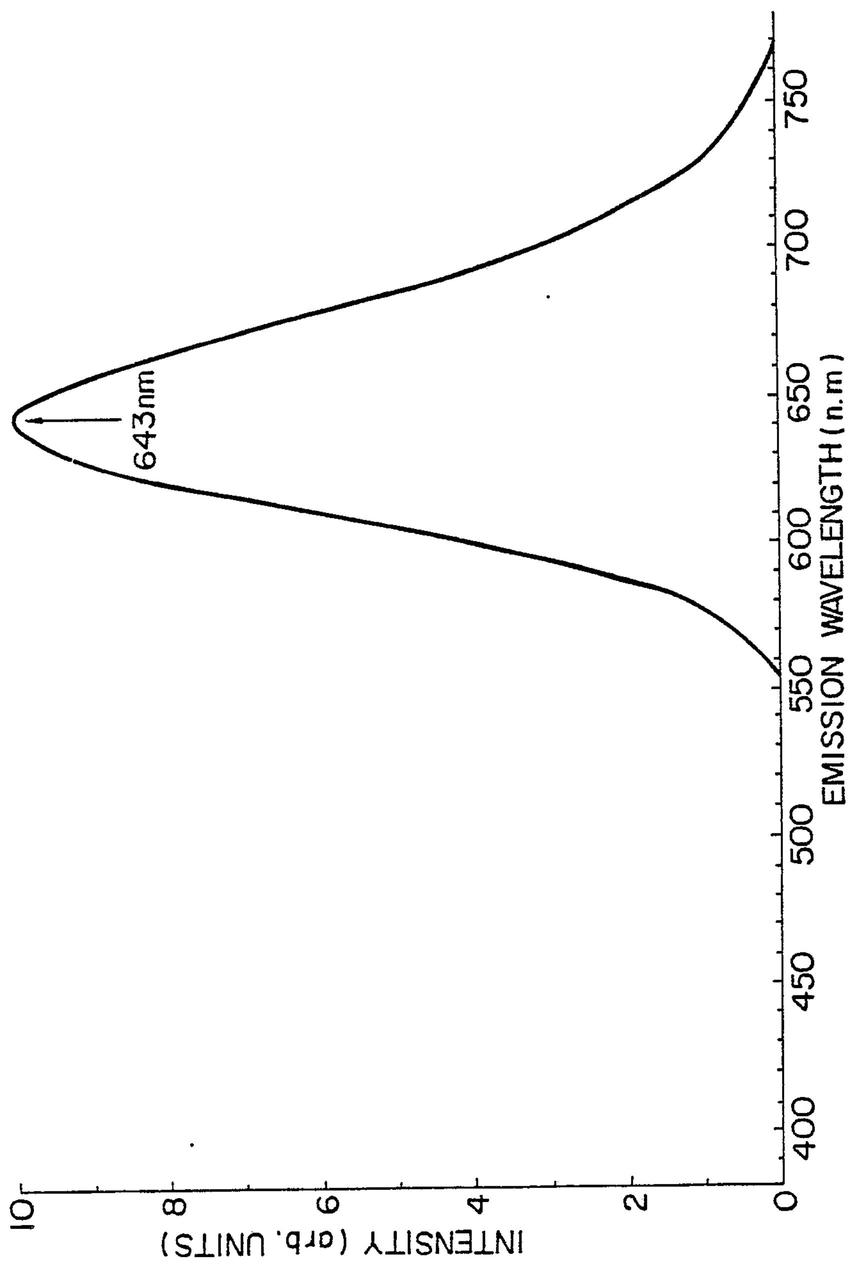
643nm
EMISSION WAVELENGTH (n.m)
400
450
500
550
600
650
700
750
INTENSITY (arb. UNITS)
0
2
4
6
8
10

FIG. 6

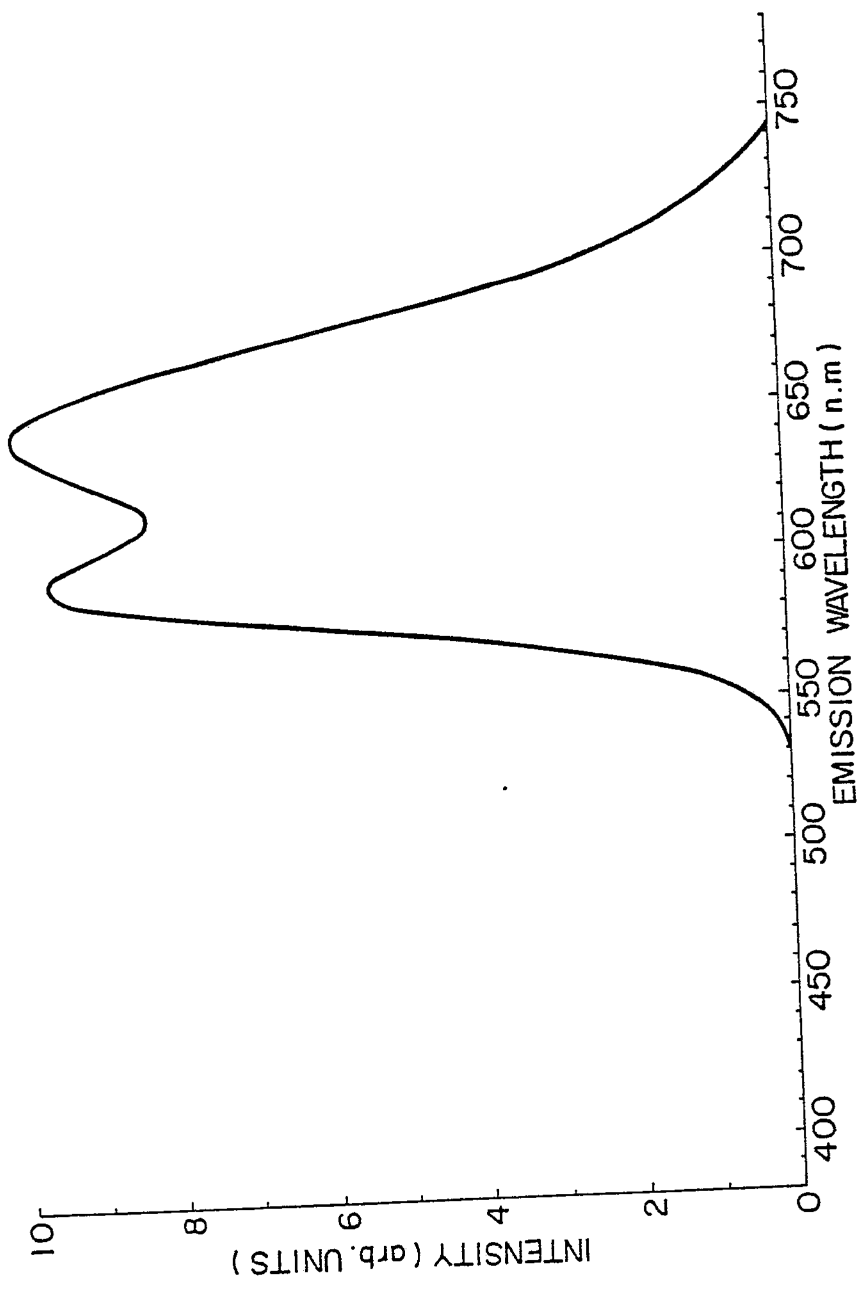

INTENSITY ( arb. UNITS )
0
2
4
6
8
10
400
450
500
550
600
650
700
750
EMISSION WAVELENGTH ( n.m )

FIG. 7

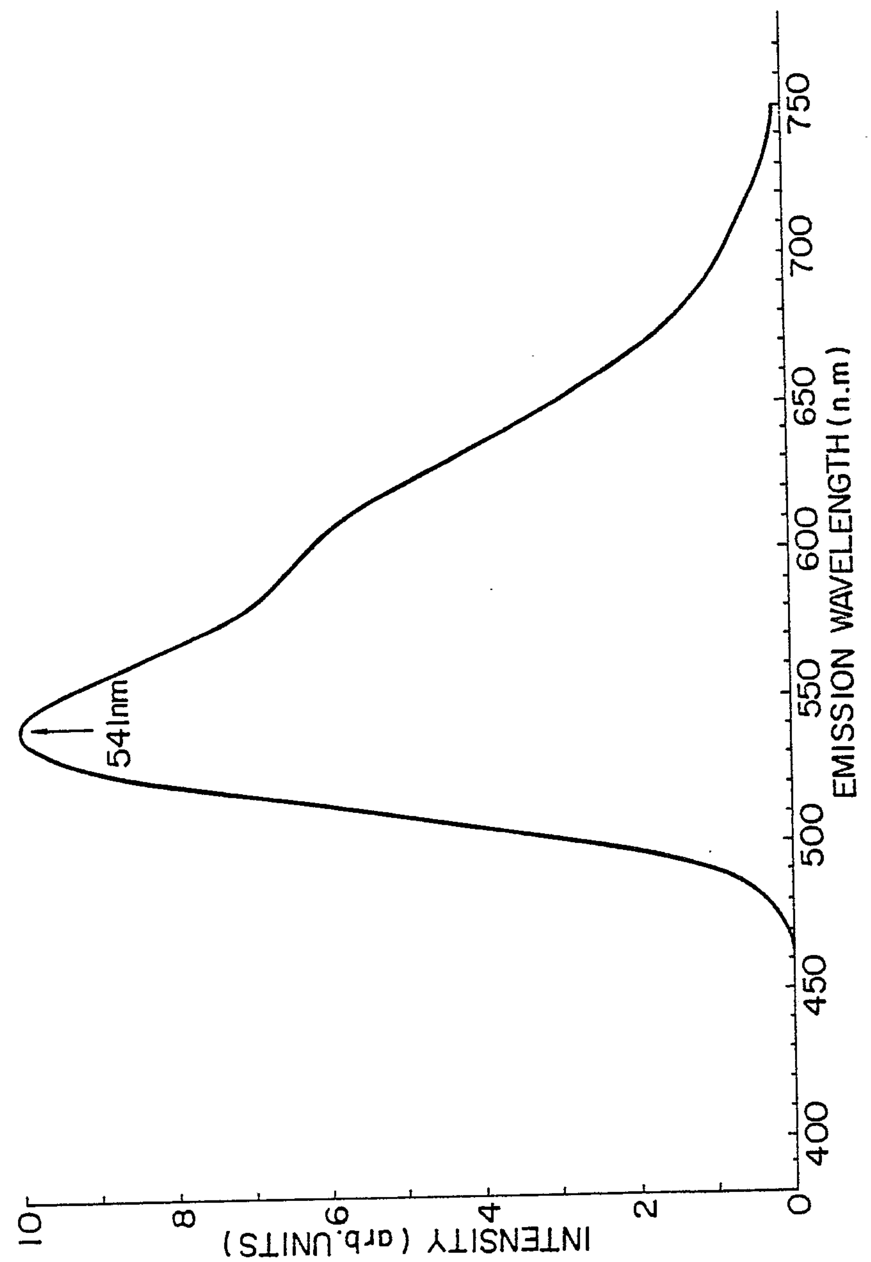
541nm
EMISSION WAVELENGTH (n.m)
400
450
500
550
600
650
700
750
INTENSITY (arb.UNITS)
0
2
4
6
8
10

FIG. 8

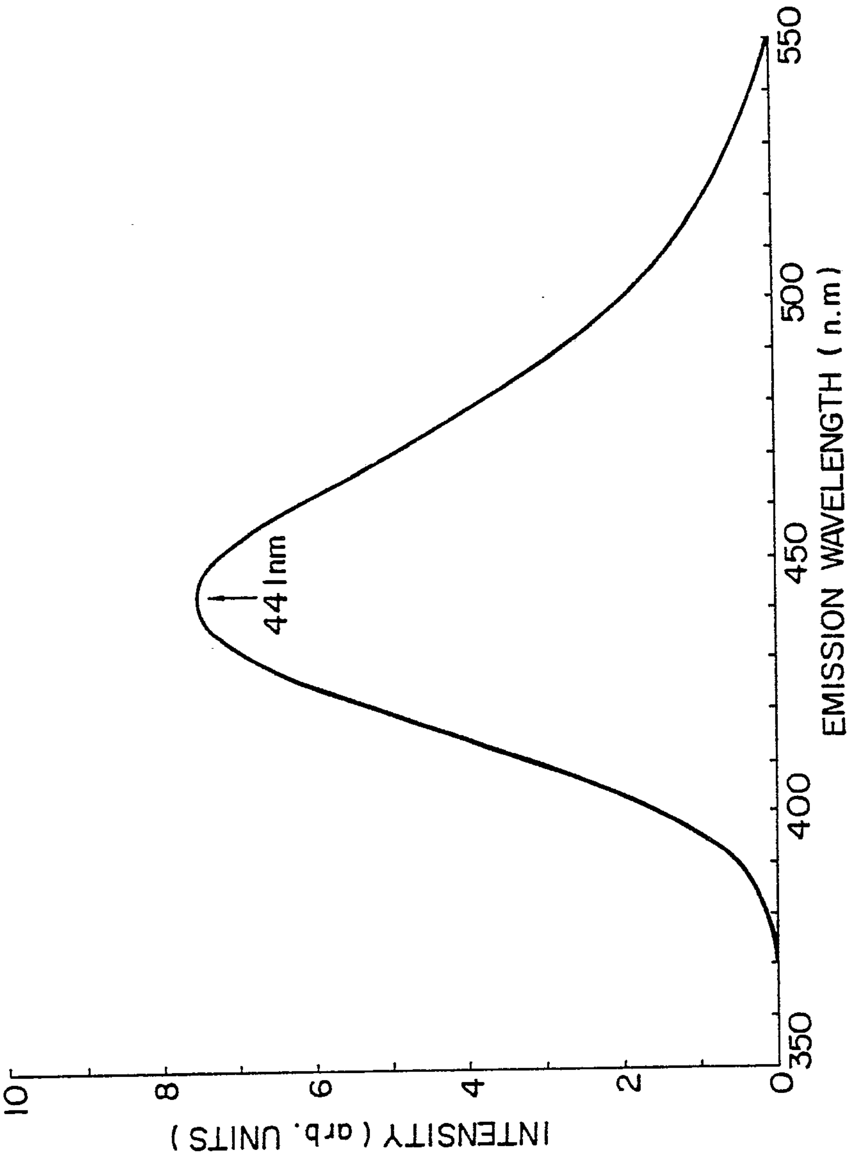
441nm
INTENSITY ( arb. UNITS )
0
2
4
6
8
10
350
400
450
500
550
EMISSION WAVELENGTH ( n.m )